# EUROPEAN PATENT SPECIFICATION

(11) **EP 2 076 548 B1**
(45) Date of publication and mention of the grant of the patent: **14.08.2019**
(21) Application number: 07838858.4
(22) Date of filing: 26.09.2007
(51) Int. Cl.: B01J 8/00, B01J 8/20, B01J 19/26

(54) **EFFERVESCENT NOZZLE FOR CATALYST INJECTION AND METHOD FOR USING THIS NOZZLE**
SCHAUMBILDENDE DÜSE FÜR KATALYSATOREINSPRITZUNG UND VERWENDUNGSVERFAHREN DAFÜR
BUSE EFFERVESCENTE D'INJECTION DE CATALYSEUR ET SON PROCÉDÉ D'UTILISATION

(30) Priority: 03.10.2006 US 848910 P
(43) Date of publication of application: 08.07.2009
(73) Proprietor: Univation Technologies, LLC, Houston, TX 77056 (US)
(72) Inventor: LIPP, Charles, W., Lake Jackson, TX 77566 (US); LYNN, Timothy, R., Glen Gardner, NJ 08826 (US); SAVATSKY, Bruce, J., Kingwood, TX 77345 (US); OSKAM, John, H., Flemington, NJ 08822 (US); DAVIS, Mark, B., Hurricane, WV 25526 (US); TERRY, Kersten, A., Midland, MI 48460 (US); ZILKER, Daniel, P., Charleston, WV 25314 (US); BLOOD, Mark, W., Hurricane, WV 25526 (US)
(74) Representative: Boult Wade Tennant LLP
(86) International application number: PCT/US2007/020743
(87) International publication number: WO 2008/042177

(56) References cited:
- US-A- 4 493 636
- US-A- 4 493 636
- US-A- 5 948 871
- US-A- 5 962 606
- US-A- 5 962 606
- US-A- 6 165 353
- US-A1- 2006 144 760
- US-B1- 6 211 310
- US-B1- 6 426 394

## Description

### FIELD OF THE INVENTION

Embodiments of the present invention generally relate to a nozzle for catalyst injection and methods for using same. More particularly, embodiments of the present invention relate to an effervescent nozzle for catalyst injection for use in polyolefin production and methods for making the same.

### BACKGROUND

Liquid catalysts used in gas phase polymerization offer many advantages over conventional solid-supported catalysts. For example, liquid catalysts require less equipment and raw materials to make. Liquid catalysts also impart fewer impurities to the final polymer product. Further, the activity of liquid catalysts is not adversely influenced by the surface area of a support material. U.S. Pat. No. 5,317,036 discloses additional details for the use of liquid catalysts for gas phase polymerization. Other background references include GB 618 674 A.

Regardless of the catalyst type, olefin polymerization, especially gas phase polymerization, depends on the uniform and reproducible injection of the catalyst into the chemical reaction. The catalyst should be dispersed uniformly throughout the reaction materials to promote uniform polymerization. An effective dispersal of catalyst within the reactor avoids fouling and promotes uniform, consistent production of polymer product.

However, the injection of liquid catalyst to a reactor system creates several challenges. For example, the liquid catalyst is typically soluble in the reaction medium and can deposit on the resin or polymer forming in the reactor, accelerating polymerization on the surface of the particles of the bed. As the
coated resin particles increase in size, the particles are exposed to a higher fraction of catalyst solution or spray because of the increased cross-sectional dimensions. If too much catalyst is deposited on the polymer particles, the polymer particles can grow so large that the particles cannot be fluidized, causing the reactor to be shut down.

Further, upon liquid catalyst injection to the reactor, the initial polymerization rate can be so high that the newly formed polymer or resin particles soften or melt. Such softened or melted polymer can adhere to one another to form larger particles in the fluidized bed. These large particles cannot be fluidized and/or can plug the reactor, requiring the reactor to be shut down. Conversely, entrainment can occur if the polymer particle size is too small. Entrained particles can foul recycle lines, compressors, and coolers. Entrained particles can also increase static electricity which can cause sheeting in the reactor. Sheeting requires the reactor to be shut down in order to be removed.

Various nozzles have been proposed to inject liquid catalyst into reactor systems. U.S. Patent No. 4,163,040 discloses a catalyst spray nozzle that utilizes a biased valve member to regulate catalyst flow. For example, U.S. Patent No. 5,693,727 discloses a catalyst spray nozzle that utilizes a shroud about a central injection tube. U.S. Patent Nos. 5,962,606 and 6,075,101 disclose a perpendicular catalyst spray nozzle and an effervescent catalyst spray nozzle. U.S. Patent Nos. 6,211,310 and 6,500,905 disclose a catalyst spray nozzle having concentric tubes to flow a cleaning gas and deflecting gas along with the catalyst.

US-A-5,948,871 discloses injection tube and nozzle configurations used to spray liquid catalyst into a particle lean zone in a fluidized bed of a reactor.

US-B-6,211,310 discloses a process for making stereoregular or regioregular polymers wherein the liquid catlyst is introduced by a catalyst delivery system comprising (i) a particle-deflecting gas tube enclosing a catalyst injection tube or nozzle or (ii) a particle-deflecting gas tube enclosing a tip-cleaning gas tube which in turn encloses a catalyst tube or nozzle.

US-A-4,493,636 discloses a method and system for injecting coal and process fluids into a fluidized bed gasification reactor. Three concentric tubes extend vertically upward into the fluidized bed. Coal particulates in a transport-gas are injected through an inner tube, and an oxygen rich mixture of oxygen and steam are injected through an inner annulus about the inner tube. A gaseous medium relatively lean in oxygen content, is injected through an annulus surrounding the inner annulus.

Other background references include WO 98/37101, WO 98/37102, and EP 0 844 020 A.

Such nozzle designs could be improved to address the problems of accelerated polymer growth discussed above as well as particle growth and accumulation on the nozzle itself. Such particle growth and accumulation can plug the nozzle which decreases the rate of catalyst injection if not block the injection all together. As a result, the catalyst injection and dispersion becomes unpredictable and unreliable leading to fouled reactors and off-spec product.

Moreover, newly developed catalysts with high catalytic activity present many new challenges. Such new catalysts typically have high kinetic profiles and polymerize before being dispersed in the reactor bed. As such, these highly active catalysts are even more prone to unwanted agglomerate formation and fouling.

There is a need, therefore, for an injection nozzle capable of uniformly and repeatably delivering liquid catalyst to a reactor system. There is also a need for a method for polymerization that uniformly delivers liquid catalyst to a reactor system. Further, there is a need for a method for polymerization that uses a liquid catalyst and is capable of controlling polymer growth and particle size.

### SUMMARY OF THE INVENTION

A nozzle for catalyst injection for olefin polymerization is provided. The nozzle includes a first conduit comprising a body, a tapered section, and a tip section comprising an injection tip;
a second conduit having an inner surface and an outer surface and wherein the second conduit comprises a plurality of orifices spaced radially and axially thereabout, wherein the first conduit is disposed about the second conduit defining a first annulus therebetween; and
a support member at least partially disposed about the outer surface of the first conduit defining a second annulus therebetween, the support member having a converging outer surface at a first end thereof, wherein said injection tip of said first conduit extends 1.27 to 5.08 cm (0.5 to 2 inches) from said first end of said support member and wherein said tip section has an annular thickness of between 0.25 and 1.57 mm (0.01 and 0.062 inches).

A method for catalyst injection is also provided. The method comprises providing one or more nozzles to the reactor, at least one nozzle comprising:
a first conduit comprising a body, a tapered section, and a tip section comprising an injection tip;
a second conduit having an inner surface and an outer surface, and wherein the second conduit comprises a plurality of orifices spaced radially and axially thereabout, wherein the first conduit is disposed about the second conduit defining a first annulus therebetween; and
a support member at least partially disposed about the outer surface of the first conduit defining a second annulus therebetween, the support member having a converging outer surface at a first end thereof, wherein said injection tip of said first conduit extends 1.27 to 5.08 cm (0.5 to 2 inches) from said first end of said support member and wherein said tip section has an annular thickness of between 0.25 and 1.57 mm (0.01 and 0.062 inches);
flowing a catalyst slurry through the first annulus and into the reactor;
flowing one or more monomers through the second annulus and into the reactor; and
flowing one or more inert gases through the annulus of the second conduit into the first annulus and into the reactor.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 depicts a schematic diagram of an injection nozzle in accordance with one or more embodiments described.
Figure 1A depicts an enlarged schematic of the injection nozzle shown in Figure 1.
Figure 2 depicts a cross sectional view taken along lines 2-2 of Figure 1A.
Figure 3 depicts a schematic of an illustrative second conduit 140.
Figure 4 depicts a cross sectional view of the second conduit 140 taken along lines 4-4 of Figure 3.
Figure 5 depicts an enlarged partial schematic of an illustrative first conduit.
Figure 6 depicts a flow diagram of an illustrative gas phase system for making polyolefin.

### DETAILED DESCRIPTION

A detailed description will now be provided. Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions, when the information in this patent is combined with available information and technology.

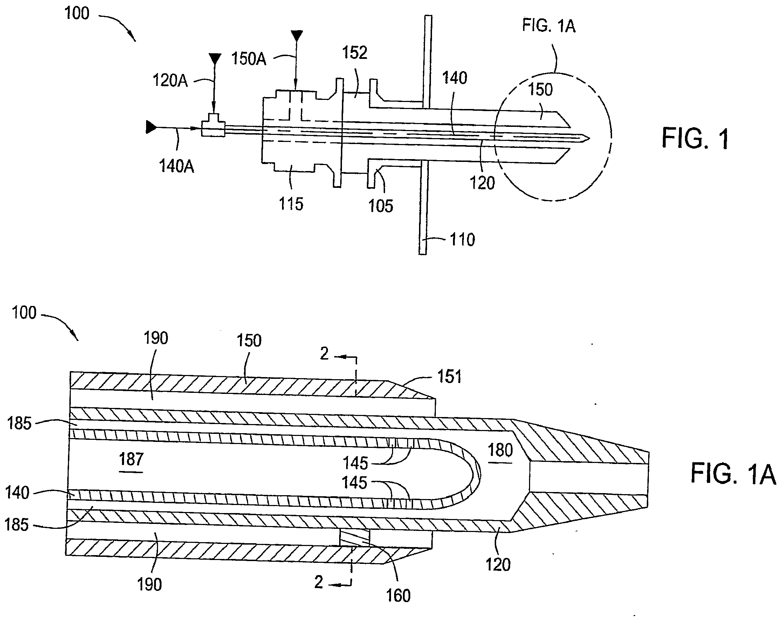

Figure 1 depicts a schematic diagram of an injection nozzle 100 in accordance with one or more embodiments described. In one or more embodiments, the nozzle 100 includes a first conduit 120, second conduit 140, and support member 150. The cross section of the first conduit 120, second conduit 140, and support member 150 can be any shape. For example, each cross section of the first conduit 120, second conduit 140, and support member 150 can be circular, square, rectangular, polygonal, elliptical, or oval, just to name a few. Preferably, each of the first conduit 120, second conduit 140, and support member 150 are tubular or annular members having inner and outer diameters. In one or more embodiments, the first conduit 120, second conduit 140 and support member 150 are concentric.

In one or more embodiments, the first conduit 120 surrounds an outer surface (i.e. outer diameter) of the second conduit 140, and the support member 150 at least partially surrounds an outer diameter of the first conduit 120. Accordingly, both the first conduit 120 and the second conduit 140 are at least partially surrounded by the support member 150.

Figure 1A depicts an enlarged, schematic diagram of the injection nozzle 100 shown in Figure 1. Referring to Figures 1 and 1A, the first conduit 120 or "outer tubular" is an conduit that surrounds an outer surface of the second conduit 140 or "inner tubular," defining an annulus or zone ("first annulus") 185 therebetween. The first conduit 120, second conduit 140, and annulus 185 are at least partially disposed within the support member 150. The outer surface, preferably outer diameter, of the first conduit 120 and the inner surface, preferably inner diameter, of the support member 150 define an annulus or zone ("second annulus") 190 therebetween.

One or more spacers 160 can be disposed about an inner surface (i.e. inner diameter) of the support member 150 or about the outer surface (i.e. outer diameter) of the first conduit 120. Preferably, the one or more spacers 160 are attached to the outer surface of the first conduit 120. The one or more spacers 160 center the first conduit 120 within the annulus 190. Any number of spacers 160 can be used. Each spacer 160 is preferably as thin as possible so not to impede or obstruct the flow path within the annulus 190, and is constructed of a material with enough strength to maintain a fixed distance between the first conduit 120 and the support member 150 during operation of the nozzle 100. Suitable materials include aluminum and stainless steel, for example. In one or more embodiments, the spacer 160 has a length to thickness ratio of about 10:1 or 20:1 or 30:1 or 40:1 or 50:1.

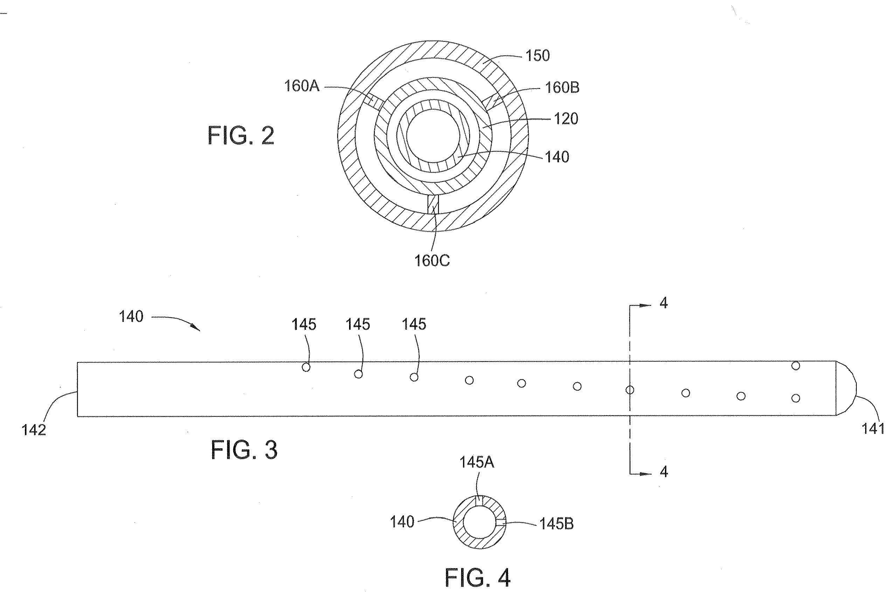

Figure 2 depicts a cross sectional view taken along lines 2-2 of Figure 1A. Three spacers 160A, 160B, 160C, are shown within the annulus 190 defined by the support member 150 and the first conduit 120. Preferably, the spacers 160A, 160B, 160C are equally spaced about the outer diameter of the first conduit 120. However, any radial configuration and spacing can be used.

Referring again to Figure 1A, the spacers 160A, 160B, 160C can be located about 1.27 cm (0.5 in.), about 2.54 cm (1 in.), about 3.81 cm (1.5 in.), about 5.08 cm (2 in.), or about 7.62 cm (3 in.) from the end of the nozzle 100. In one or more embodiments, the spacers 160A, 160B, 160C are located between about 1.27 cm (0.5 in.) and about 2.54 cm (1 in.) from the end of the nozzle 100. For example, the spacers 160A, 160B, 160C can be located about 4.1 cm (1-5/8 inches) (in.)) from the end of the nozzle 100. In one or more embodiments above
or elsewhere herein, each spacer 160A, 160B, 160C can be located at a different distance from the end of the nozzle 100. For example, each spacer 160A, 160B, 160C can range from 1.27 cm (0.5 in.) to 7.62 cm (3 in.) from the end of the nozzle 100.

### Second conduit 140

Figure 3 depicts a schematic view of the second conduit 140 shown in Figure 1. In one or more embodiments, the second conduit 140 has a closed first end 141 and an open second end 142. The second end 142 can be adapted to receive one or more fluids to flow through the annulus 187 (Figure 1) of the second conduit 140. The first end 141 is preferably welded shut into a semi-spherical tip. In a preferred embodiment where the second conduit is tubular or annular, the second conduit 140 can have an inner diameter ranging from 0.159 cm (1/16") to 1.27 cm (1/2"), preferably about 0.2159 cm (0.085") to 0.635 cm (1/4").

The second conduit 140 includes a plurality of orifices 145 that allow the one or more fluids to exit the second conduit 140. The orifices 145 can be designed and positioned about the second conduit 140 to provide a consistent and uniform dispersion of the fluid flowing therethrough into the surrounding annulus 185. In one or more embodiments, the number of orifices 145 formed in the second conduit 140 ranges from 1 to 1000, preferably 10 to 100, more preferably 10 to 20. In one or more embodiments, each orifice 145 has an inner diameter ranging from a low of 0.01 cm, 0.03 cm, or 0.05 cm to a high of 0.06 cm, 0.08 cm, or 1.0 cm.

Preferably, the orifices 145 are equally spaced about the diameter of the second conduit 140. In at least one specific embodiment, two lines of two or more orifices 145 are disposed axially about the diameter of the second conduit 140 although any number of lines can be used such as three or four depending on flow rates and production requirements. Each line can be arranged in a helical pattern along the length of the second conduit 140. In other words, each orifice 145 in a line can be spaced radially and axially from one another.

Likewise, each orifice 145 in a line can be radially offset from an orifice 145 of another line. For instance, in a two line arrangement as shown in Figure 3, an orifice 145 from a first line is preferably offset by 90 degrees to 180 degrees from an axially corresponding orifice 145 of the second line. In a three line arrangement, axially corresponding orifices 145 are preferably offset by about 120 degrees from one another, although any degree of spacing can be used.

Figure 4 depicts a cross sectional view of the second conduit 140 taken along lines 4-4 of Figure 3. Figure 4 depicts an illustrative radial spacing of an orifice 145A from a first line and an orifice 145B from a second line. Orifice 145A of the first line is shown offset by about 90 degrees from the orifice 145B of the second line. However, any degree of spacing can be used. For example, orifices from differing lines can be radially spaced between 5 degrees to 180 degrees, preferably 10 degrees to 160 degrees, more preferably 20 degrees to 100 degrees, and more preferably 60 degrees to 90 degrees.

Referring to Figures 3 and 4, each orifice 145 can be shaped and sized independent of another. In one or more embodiments, the shape of any given orifice 145 can be circular, curved, oval, elliptical, squared, rectangular, or any other polygonal shape. For examples, the orifices 145 in a given helical line can be any combination of two or more shapes including circular, curved, oval, elliptical, squared, rectangular, and any other polygonal shape. Likewise, the orifices 145A, 145B from offsetting lines can have the same combination of shapes.

In one or more embodiments, the orifices 145 in a given line have the same shape and size. In one or more embodiments, the orifices 145 in a given line have different shapes and sizes. In one or more embodiments, the orifices 145 in a given line have the same shape and size as the orifices 145 of one or more different lines. In one or more embodiments, the orifices 145 in a given line have different shapes and sizes than the orifices 145 of one or more different lines.

The portion of the second conduit 140, over which the holes are drilled, can range from 0.5 and 25 cm in length although the holes are preferably present in the last 1 to 2 cm of the second conduit 140 (i.e. from the first end 141).

In relation to the first conduit 120, the second conduit 140 can be positioned so that the first end 141 is positioned less than 7.6 cm (3") from a tip 121 ("spray point") of the first conduit 120. In one or more embodiments, the first end 141 of the second conduit 140 is positioned 1.27 cm (0.5 in.) to 7.62 cm (3 in.) from the tip 121 of the first conduit 120. In one or more embodiments, the first end 141 of the second conduit 140 is positioned 1.27 cm (0.5 in.) to 3.81 cm (1.5 in.) from the tip 121 of the first conduit 120. In one or more embodiments, the first end 141 of the second conduit 140 is positioned 1.27 cm (0.5 in.) to 2.54 cm (1 in.) from the tip 121 of the first conduit 120.

### First conduit 120

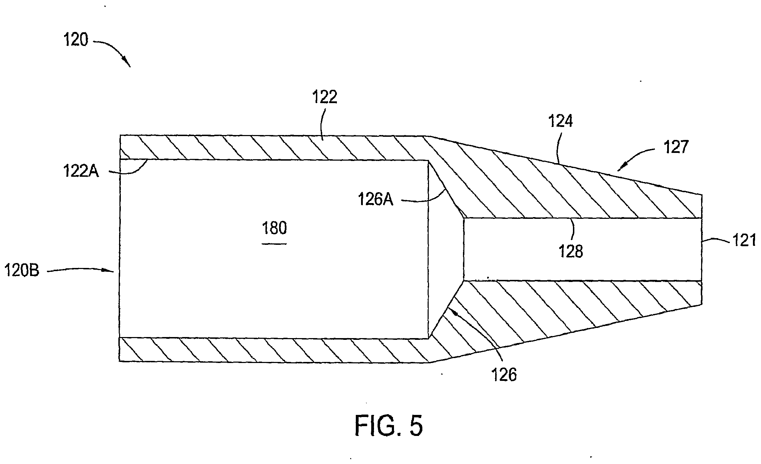

Considering the first conduit 120 in more detail, Figure 5 depicts an enlarged, partial schematic view of the first conduit 120. The first conduit 120 can include a body 122, a transition section 126, and a first end or tip section 127. The body 122 has an inner surface or diameter 122A that defines a passageway or annulus 185 therethrough. The inner surface or diameter 122A is relatively constant from a second end 120B of the first conduit 120 to the transition section 126. The inner surface or diameter 126A of the transition section 126 also defines a passageway or annulus therethrough and gradually decreases or converges (i.e. tapers) to the inner surface or diameter 128 of the tip section 127. The inner surface or diameter 128 of the tip section 127 also defines a passageway or annulus therethrough and is relatively constant across the length of the tip section 127.

At least a portion of the inner surface or diameter 122A and at least a portion of the inner surface or diameter 126A define the mixing zone 180 therein. The length of the mixing zone 180 depends on process requirements and can be manipulated by the length and spacing of the second conduit 140 in relation to the converging inner surface or diameter 126A of the first conduit 120.

In a preferred embodiment where the first conduit 120 is tubular or annular, the slope of the inner diameter 126A can vary depending on process requirements and flow rates of catalyst injection. In one or more embodiments, the slope (y/x) of the inner diameter 126A of the transition section 126 ranges from a low of 2:1, 2:1, or 5:1 to a high of 7:1, 10:1 or 20:1.

In operation, turbulence from the fluid(s) exiting the nozzle 100 creates back-flow that can deposit catalyst on the outer diameter of the first conduit 120. Such deposit can subsequently undergo polymerization and foul the nozzle 100. Accordingly, the outer surface or diameter 124 of the tip section 127 is tapered or converges to the tip 121 ("spray point"). Suitable taper angles range from a low of 4°, 5°, or 6° to a high of 10°, 15° or 20°. Higher taper angles can be tolerated given that the taper off horizontal is gradual. Preferably, the taper angle ranges from 5° to 10°. In one or more embodiments, the taper angle is about 7°.

The tip section 127 can have a variety of cross sectional configurations including but not limited to circular, eliptical, oval, square, rectangular, polygonal or parabolic. The slope of the outer surface or diameter 124 of the tip section 127 can vary depending on process requirements and flow rates of catalyst injection. In one or more embodiments, the slope (y/x) of the outer diameter 124 can range from a low of 2:1, 2:1, or 5:1 to a high of 7:1, 10:1 or 20:1.

A small tip 121 can help prevent fouling by providing a smaller surface area for catalyst and polymer to accumulate. The tip section 127 has an annular thickness of between 0.25 and 1.57 mm (0.01 and 0.062 inches) in order to minimize fouling while maintaining adequate strength.

The first conduit 120 can have an inner diameter ranging from about 0.125 in. (0.318cm) to about 3 in. (7.62 cm). In one or more embodiments, the first conduit 120 can have an inner diameter ranging from about 0.125 in. (0.318 cm) to about 1.5 in. (3.81 cm). In one or more embodiments, the first conduit 120 can have an inner diameter ranging from 0.318 cm (0.125 in.) to 1.27 cm (0.5 in.).

In one or more preferred embodiments, the first conduit 120 is positioned within the support member 150 such that the tip 121 of the first conduit 120 extends about 2.5 cm (1") from the end of the support member 150. In one or more preferred embodiments, the tip 121 of the first conduit 120 extends about 3.81 cm (1.5 inches) from the end of the support member 150.

In one or more embodiments, the tip 121 of the first conduit 120 extends 1.27 cm (0.5 in.) to 3.81 cm (1.5 in.) from the first end 141 of the second conduit 140. In one or more embodiments, the tip 121 of the first conduit 120 extends 1.27 cm (0.5 in.) to 2.54 cm (1 in.) from the first end 141 of the second conduit 140.

### Support member 150

Referring again to Figure 1, the support member 150 can include a first end having a flanged section 152. The support member 150 can also include a second end that is open to allow a fluid to flow therethrough. In one or more embodiments, the support member 150 is secured to a reactor wall 110. Preferably, the support member 150 is secured to a reactor wall 110. In one or more embodiments, the flanged section 152 can be adapted to mate or abut up against a flanged portion 105 of the reactor wall 110 as shown. Any other conventional way for securing or fastening tubing or piping can be used.

In a preferred embodiment, the support member 150 is a tubular or annular member. The support member 150 preferably has an inner diameter large enough to surround the first conduit 120. In one or more embodiments, the inner diameter of the support member 150 is about 1.27 cm (0.5 in.), about 1.59 cm (0.625 in.), or about 1.91 cm (0.75 in.). In one or more embodiments, the inner diameter of the support member 150 ranges from a low of 1.27 cm (0.5 in.) to a high of 1.91 cm (0.75 in.). In one or more embodiments, the inner diameter of the support member 150 ranges from a low of 1.27 cm (0.5 in.) to a high of 1.59 cm (0.625 in.). In one or more embodiments, the inner diameter of the support member 150 ranges from a low of 1.59 cm (0.625 in.) to a high of 1.91 cm (0.75 in.).

In one or more embodiments, at least a portion of the support member 150 has a tapered outer diameter 151 as depicted in Figure 1A. The second end ("open end") of the support member 150 is preferably tapered to reduce the wall thickness at the tip of the support member 150. As described above with reference to the tip 121 of the first conduit 120, minimizing the area at the tip of the support member 150 helps prevent fouling. Fouling can be caused due to agglomerate formation of polymer on the nozzle 100.

### Feed Lines

Referring to Figures 1 and 1A, the injection nozzle 100 is in fluid communication with one or more feed lines (three are shown in Figure 1) 120A, 140A, 150A. Each feed line 120A, 140A, 150A provides an independent flow path for one or more monomers, purge gases, and catalyst and/or catalyst systems to any one or more of the conduits 120, 140, 150. For example, feed line ("first feed line") 120A can be in fluid communication with the annulus 185 defined by the inner surface of the first conduit 120 and the outer surface of the second conduit 140. In one or more embodiments above or elsewhere herein, a feed line ("second feed line") 140A can be in fluid communication with the annulus 187 within the second conduit 140. In one or more embodiments above or elsewhere herein, a feed line ("third feed line") 150A can be in fluid communication with the annulus 190 defined by the inner surface of the support member 150 and the outer surface of the first conduit 120.

The one or more catalyst or catalyst systems are injected into the first conduit 120 using the first feed line 120A ("catalyst feed line"). The one or more purge gases or inert gases are injected into the second conduit 140 using the second feed line 140A ("purge gas feed line"). The one or more monomers are injected into the support member 150 using the third feed line 150A ("monomer feed line"). The feed lines 120A, 140A and 150A can be any conduit capable of transporting a fluid therein. Suitable conduit can include tubing, flex hose, and pipe. A three way valve 115 can be used to introduce and control the flow of the fluids (i.e. catalyst slurry, purge gas and monomer) to the injection nozzle 100. Any commercially available three way valve can be used.

### Materials of Construction

Any of the conduits 120, 140 and 150 described in addition to the spacers 160 can be constructed of any material that is not reactive under the selected polymerization conditions. Suitable materials include, but are not limited to, aluminum, aluminum bronze, Hastalloy, Inconel, Incoloy, monel, chrome carbide, boron carbide, cast iron, ceramics, copper, nickel, silicon carbide, tantalum, titanium, zirconium, tungsten carbide, as well as certain polymeric compositions. Particularly preferred is stainless steel.

### Operation of nozzle

In operation, a catalyst slurry is introduced to the nozzle 100 via line 120A as depicted in Figure 1. The catalyst slurry flows through the annulus 185 between the first conduit 120 and the second conduit 140. The catalyst slurry can have a flow rate of 0.4 kg/hr (1 lb per hour (lb/hr)) to 23 kg/hr (50 lb/hr); or 1.4 kg/hr (3 lb/hr) to 14 kg/hr (30 lb/hr); or 2.3 kg/hr (5 lb/hr)
to 4.5 kg/hr (10 lb/hr) through the annulus 185. Preferably, the catalyst slurry contains fully formed catalyst particles suspended in one or more inert liquids. In one or more embodiments, the catalyst particles are at least partially dissolved in one or more inert liquids. In one or more embodiments, the catalyst particles are substantially if not completely dissolved in the one or more inert liquids. The catalyst particles can include one or more catalysts, catalyst systems or combinations thereof.

Suitable liquids include but are not limited to non-functional hydrocarbons and aliphatic hydrocarbons such as butane, isobutane, ethane, propane, pentane, isopentane, hexane, octane, decane, dodecane, hexadecane, octadecane, and the like; alicyclic hydrocarbons such as cyclopentane, methylcyclopentane, cyclohexane, cyclooctane, norbornane, ethylcyclohexane and the like; aromatic hydrocarbons such as benzene, toluene, ethylbenzene, propylbenzene, butylbenzene, xylene, and the like; and petroleum fractions such as gasoline, kerosene, light oils, and the like. Likewise, halogenated hydrocarbons such as methylene chloride, chlorobenzene, and the like, can also be used. By "non-functional", it is meant that the liquids do not contain groups such as strong polar groups which can deactivate the active transition metal sites of the catalyst compound(s).

One or more inert purge gases can be introduced to the nozzle 100 via line 140A. Referring to Figures 1A and 3, the inert purge gases flow through the annulus 187 within the second conduit 140 and are dispersed into at least a portion of the annulus 185 via the one or more orifices 145 arranged about the second conduit 140. The exiting inert gases mix with the catalyst slurry when contacted within the annulus 185 and further mix in the mixing zone 180 prior to entering the injection tip 127 (depicted in Figure 5).

Referring to Figures 1A and 5, the catalyst slurry and inert purge gas flow through the injection tip 127 and exit the nozzle via the tip 121. The mixture of catalyst slurry and inert gas is sprayed into the support tube purge stream and mixes into the fluidized bed of polymer. The combined action of the primary atomization from the tip 121 and the secondary atomization from interaction with
the support tube flow makes small droplets that are well dispersed into the fluidized bed, thereby reducing agglomeration of the incoming catalyst particles.

Accordingly, the flow rate of the purge gas should be sufficient to deliver a finely sprayed mix of catalyst from the tip 121 of the nozzle. In one or more embodiments, the purge gas flow rate is between 0.4 kg/hr (1 lb/hr) and 9.1 kg/hr (20 lb/hr). In one or more embodiments, the purge gas flow rate is between 1.3 kg/hr (3 lb/hr) and 6.8 kg/hr (15 lb/hr). In one or more embodiments, the purge gas flow rate ranges from a low of 0.4 kg/hr (1 lb/hr), 0.8 kg/hr (2 lb/hr), or 1.6 kg/hr (4 lb/hr) to a high of 3.2 kg/hr (8 lb/hr), 5.9 kg/hr (13 lb/hr), or 9.1 kg/hr (20 lb/hr).

The resulting catalyst particle population per droplet exiting the nozzle 100 is preferably small enough to prevent or reduce agglomerate formation. For example, the resulting droplet size exiting the nozzle 100 is preferably greater than 30 µm (microns) and less than 200 µm (microns). In one or more embodiments, the resulting droplet size exiting the nozzle 100 can range from 50 µm (microns) to 150 µm (microns).

Referring again to Figures 1 and 1A, one or more monomers flow through the annulus 190 defined between the support tube 150 and the first conduit 120. The one or more monomers are introduced to the nozzle 100 through the line 150A. The monomer flow keeps the catalyst injection area clean and provides stable operation by preventing catalyst accumulation and fouling on the outer surface of the first conduit 120. The monomer should flow at a sufficient rate to sweep the outer diameter of the first conduit 120. If the monomer flow is low, then catalyst rich polymeric chunks can form on the end of the first conduit 120. This will reduce the efficiency of the catalyst which will be indicated by a reduction of production rate. Exemplary rates may be from 907 kg/hr to 1136 kg/ hr (2,000 to 2,500 lb/hr). Another function of this flow of monomer in annulus 190 in the described nozzle system is that it disperses catalyst into the reactor in such a way that polymer agglomerates in the reactor are reduced or eliminated.

In one or more embodiments, the monomer flow is between 455 kg/hr (1,000 lb/hr) and 2273 kg/ hr (5,000 lb/hr). In one or more
embodiments, the monomer flow is between 907 kg/hr (2,000) and 1360 kg/hr (3,000 lb/hr). In one or more embodiments, the monomer flow ranges from a low of 455 kg/hr (1,000 lb/hr), 682 kg/hr (1,500 lb/hr), or 907 kg/hr (2,000 lb/hr) to a high of 1,000 kg/hr (2,200 lb/hr), 1,136 kg/hr (2,500 lb/hr), or 1,360 kg/hr (3,000 lb/hr).

### POLYMEMZATION

The injection nozzle 100 is suitable for use with any polymerization process. Suitable polymerization processes include solution, gas phase, slurry phase and a high pressure process, or a combination thereof. A desirable process is a gas phase or slurry phase polymerization of one or more olefins at least one of which is ethylene or propylene.

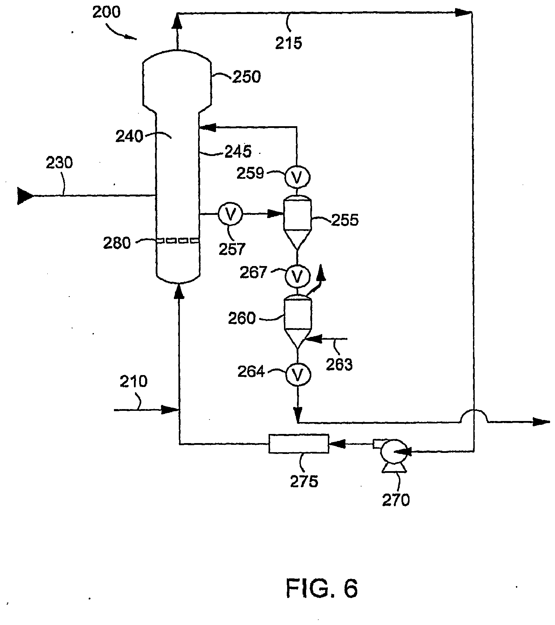

Figure 6 depicts a flow diagram of an illustrative gas phase system for making polyolefin. In one or more embodiments, the system 200 includes a reactor 240 in fluid communication with one or more discharge tanks 255 (only one shown), surge tanks 260 (only one shown), recycle compressors 270 (only one shown), and heat exchangers 275 (only one shown). The polymerization system 200 can also include more than one reactor 240 arranged in series, parallel, or configured independent from the other reactors, each reactor having its own associated tanks 255, 260, compressors 270, recycle compressors 270, and heat exchangers 275 or alternatively, sharing any one or more of the associated tanks 255, 260, compressors 270, recycle compressors 270, and heat exchangers 275. For simplicity and ease of description, embodiments of the invention will be further described in the context of a single reactor train.

In one or more embodiments, the reactor 240 can include a reaction zone 245 in fluid communication with a velocity reduction zone 250. The reaction zone 245 can include a bed of growing polymer particles, formed polymer particles and catalyst particles fluidized by the continuous flow of polymerizable and modifying gaseous components in the form of make-up feed and recycle fluid through the reaction zone 245.

A feed stream or make-up stream 210 can be introduced into the polymerization system at any point. For example, the feed stream or make-up stream 210 can be introduced to the reactor fluid bed in the reaction zone 245 or to the expanded section 250 or to any point within the recycle stream 215. Preferably, the feed stream or make-up stream 210 is introduced to the recycle stream 215 before or after the heat exchanger 275. In Figure 6, the feed stream or make-up stream 210 is depicted entering the recycle stream 215 after the cooler 275.

The term "feed stream" as used herein refers to a raw material, either gas phase or liquid phase, used in a polymerization process to produce a polymer product. For example, a feed stream may be any olefin monomer including substituted and unsubstituted alkenes having two to 12 carbon atoms, such as ethylene, propylene, butene, pentene, 4-methyl-1-pentene, hexene, octene, decene, 1-dodecene, styrene, and derivatives thereof. The feed stream also includes non-olefinic gas such as nitrogen and hydrogen. The feeds may enter the reactor at multiple and different locations. For example, monomers can be introduced into the polymerization zone in various ways including direct injection through a nozzle (not shown in the drawing) into the bed. The feed stream can further include one or more non-reactive alkanes that may be condensable in the polymerization process for removing the heat of reaction. Illustrative non-reactive alkanes include, but are not limited to, propane, butane, isobutane, pentane, isopentane, hexane, isomers thereof and derivatives thereof.

The fluidized bed has the general appearance of a dense mass of individually moving particles as created by the percolation of gas through the bed. The pressure drop through the bed is equal to or slightly greater than the weight of the bed divided by the cross-sectional area. It is thus dependent on the geometry of the reactor. To maintain a viable fluidized bed in the reaction zone 245, the superficial gas velocity through the bed must exceed the minimum flow required for fluidization. Preferably, the superficial gas velocity is at least two times the minimum flow velocity. Ordinarily, the superficial gas velocity does not exceed 1.5 metres/sec (5.0 ft/sec) and usually no more than 0.76 metres (2.5 ft/sec) is sufficient.

In general, the height to diameter ratio of the reaction zone 245 can vary in the range of from 2:1 to 5:1. The range, of course, can vary to larger or smaller ratios and depends upon the desired production capacity. The cross-sectional area of the velocity reduction zone 250 is typically within the range of 2 to 3 multiplied by the cross-sectional area of the reaction zone 245.

The velocity reduction zone 250 has a larger inner diameter than the reaction zone 245. As the name suggests, the velocity reduction zone 250 slows the velocity of the gas due to the increased cross sectional area. This reduction in gas velocity allows particles entrained in the upward moving gas to fall back into the bed, allowing primarily only gas to exit overhead of the reactor 240 through recycle gas stream 215.

The recycle stream 215 can be compressed in the compressor/compressor 270 and then passed through the heat exchanger 275 where heat is removed before it is returned to the bed. The heat exchanger 275 can be of the horizontal or vertical type. If desired, several heat exchangers can be employed to lower the temperature of the cycle gas stream in stages. It is also possible to locate the compressor downstream from the heat exchanger or at an intermediate point between several heat exchangers. After cooling, the recycle stream 215 is returned to the reactor 240. The cooled recycle stream absorbs the heat of reaction generated by the polymerization reaction.

Preferably, the recycle stream 215 is returned to the reactor 240 and to the fluidized bed through a gas distributor plate 280. A gas deflector 280 is preferably installed at the inlet to the reactor to prevent contained polymer particles from settling out and agglomerating into a solid mass and to prevent liquid accumulation at the bottom of the reactor as well to facilitate easy transitions between processes which contain liquid in the cycle gas stream and those which do not and vice versa. An illustrative deflector suitable for this purpose is described in U.S. Pat. No. 4,933,415 and 6,627,713.

A catalyst or catalyst system is preferably introduced to the fluidized bed within the reactor 240 through the one or more injection nozzles 100 described in fluid communication with stream 230. The catalyst or catalyst system is
preferably introduced as pre-formed particles in one or more liquid carriers (i.e. a catalyst slurry). Suitable liquid carriers include mineral oil and liquid hydrocarbons including but not limited to propane, butane, isopentane, hexane, heptane and octane, or mixtures thereof. A gas that is inert to the catalyst slurry such as, for example, nitrogen or argon can also be used to carry the catalyst slurry into the reactor 240. In one or more embodiments, the catalyst or catalyst system can be a dry powder. In one or more embodiments, the catalyst or catalyst system can be dissolved in the liquid carrier and introduced to the reactor 240 as a solution.

Under a given set of operating conditions, the fluidized bed is maintained at essentially a constant height by withdrawing a portion of the bed as product at the rate of formation of the particulate polymer product. Since the rate of heat generation is directly related to the rate of product formation, a measurement of the temperature rise of the fluid across the reactor (the difference between inlet fluid temperature and exit fluid temperature) is indicative of the rate of particulate polymer formation at a constant fluid velocity if no or negligible vaporizable liquid is present in the inlet fluid.

On discharge of particulate polymer product from reactor 240, it is desirable and preferable to separate fluid from the product and to return the fluid to the recycle line 215. In one or more embodiments, this separation is accomplished when fluid and product leave the reactor 240 and enter the product discharge tanks 255 (one is shown) through valve 257, which may be a ball valve designed to have minimum restriction to flow when opened. Positioned above and below the product discharge tank 255 are conventional valves 259, 267. The valve 267 allows passage of product into the product surge tanks 260 (only one is shown).

In at least one embodiment, to discharge particulate polymer from reactor 240, valve 257 is opened while valves 259, 267 are in a closed position. Product and fluid enter the product discharge tank 255. Valve 257 is closed and the product is allowed to settle in the product discharge tank 255. Valve 259 is then opened permitting fluid to flow from the product discharge tank 255 to the reactor 245. Valve 259 is then closed and valve 267 is opened and any product in the product discharge tank 255 flows into the product surge tank 260. Valve 267 is then closed. Product is then discharged from the product surge tank 260 through valve 264. The product can be further purged via purge stream 263 to remove residual hydrocarbons and conveyed to a pelletizing system or to storage (not shown). The particular timing sequence of the valves 257, 259, 267, 264 is accomplished by the use of conventional programmable controllers which are well known in the art.

Another preferred product discharge system which can be alternatively employed is that disclosed and claimed in U.S. Pat. No. 4,621,952. Such a system employs at least one (parallel) pair of tanks comprising a settling tank and a transfer tank arranged in series and having the separated gas phase returned from the top of the settling tank to a point in the reactor near the top of the fluidized bed.

The fluidized-bed reactor is equipped with an adequate venting system (not shown) to allow venting the bed during start up and shut down. The reactor does not require the use of stirring and/or wall scraping. The recycle line 215 and the elements therein (compressor 270, heat exchanger 275) should be smooth surfaced and devoid of unnecessary obstructions so as not to impede the flow of recycle fluid or entrained particles.

Various techniques for preventing fouling of the reactor and polymer agglomeration can be used. Illustrative of these techniques are the introduction of finely divided particulate matter to prevent agglomeration, as described in U.S. Pat. Nos. 4,994,534 and 5,200,477; the addition of negative charge generating chemicals to balance positive voltages or the addition of positive charge generating chemicals to neutralize negative voltage potentials as described in U.S. Pat. No. 4,803,251. Antistatic substances may also be added, either continuously or intermittently to prevent or neutralize electrostatic charge generation. Condensing mode operation such as disclosed in U.S. Pat. Nos. 4,543,399 and 4,588,790 can also be used to assist in heat removal from the fluid bed polymerization reactor.

The conditions for polymerizations vary depending upon the monomers, catalysts, catalyst systems, and equipment availability. The specific conditions are known or readily derivable by those skilled in the art. For example, the temperatures are within the range of from -10°C to 120°C, often 15°C to 110°C. Pressures are within the range of from 0.01 MPa (0.1 bar) to 10 MPa (100 bar), such as 0.5 MPa (5 bar) to 5 MPa (50 bar), for example. Additional details of polymerization can be found in U.S. Patent No. 6,627,713.

### CATALYST SYSTEM

The catalyst system can include Ziegler-Natta catalysts, chromium-based catalysts, metallocene catalysts and other single-site catalysts including Group 15-containing catalysts bimetallic catalysts, and mixed catalysts. The catalyst system can also include AlCl₃, cobalt, iron, palladium, chromium/chromium oxide or "Phillips" catalysts. Any catalyst can be used alone or in combination with the others. In one or more embodiments, a "mixed" catalyst is preferred.

The term "catalyst system" includes at least one "catalyst component" and at least one "activator", alternately at least one cocatalyst. The catalyst system can also include other components, such as supports, and is not limited to the catalyst component and/or activator alone or in combination. The catalyst system can include any number of catalyst components in any combination as described, as well as any activator in any combination as described.

The term "catalyst component" includes any compound that, once appropriately activated, is capable of catalyzing the polymerization or oligomerization of olefins. Preferably, the catalyst component includes at least one Group 3 to Group 12 atom and optionally at least one leaving group bound thereto.

The term "leaving group" refers to one or more chemical moieties bound to the metal center of the catalyst component that can be abstracted from the catalyst component by an activator, thereby producing the species active towards olefin polymerization or oligomerization. Suitable activators are described in detail below.

As used herein, in reference to Periodic Table "Groups" of Elements, the "new" numbering scheme for the Periodic Table Groups are used as in the CRC Handbook of Chemistry and Physics (David R. Lide, ed., CRC Press 81st ed. 2000).

The term "substituted" means that the group following that term possesses at least one moiety in place of one or more hydrogens in any position, the moieties selected from such groups as halogen radicals (for example, Cl, F, Br), hydroxyl groups, carbonyl groups, carboxyl groups, amine groups, phosphine groups, alkoxy groups, phenyl groups, naphthyl groups, C1 to C10 alkyl groups, C2 to C10 alkenyl groups, and combinations thereof. Examples of substituted alkyls and aryls includes, but are not limited to, acyl radicals, alkylamino radicals, alkoxy radicals, aryloxy radicals, alkylthio radicals, dialkylamino radicals, alkoxycarbonyl radicals, aryloxycarbonyl radicals, carbomoyl radicals, alkyl- and dialkyl- carbamoyl radicals, acyloxy radicals, acylamino radicals, arylamino radicals, and combinations thereof.

### Chromium catalysts

Suitable chromium catalysts can include di-substituted chromates, such as CrO2(OR)2; where R is triphenylsilane or a tertiary polyalicyclic alkyl. The chromium catalyst system may further include CrO3, chromocene, silyl chromate, chromyl chloride (CrO2Cl2), chromium-2-ethyl-hexanoate, chromium acetylacetonate (Cr(AcAc)3), and the like.

### Metallocenes

Metallocenes are generally described throughout in, for example, 1 & 2 Metallocene-Based Polyolefins (John Scheirs & W. Kaminsky, eds., John Wiley & Sons, Ltd. 2000); G.G. Hlatky in 181 Coordination Chem. Rev. 243-296 (1999) and in particular, for use in the synthesis of polyethylene in 1 Metallocene-Based Polyolefins 261-377 (2000). The metallocene catalyst compounds as described herein include "half sandwich" and "full sandwich" compounds having one or more Cp ligands (cyclopentadienyl and ligands isolobal to cyclopentadienyl) bound to at least one Group 3 to Group 12 metal atom, and one or more leaving group(s) bound to the at least one metal atom. Hereinafter, these compounds will be referred to as "metallocenes" or "metallocene catalyst components". The metallocene catalyst component is supported on a support material in an embodiment, and may be supported with or without another catalyst component.

. The Cp ligands are one or more rings or ring system(s), at least a portion of which includes *π*-bonded systems, such as cycloalkadienyl ligands and heterocyclic analogues. The ring(s) or ring system(s) typically comprise atoms selected from the group consisting of Groups 13 to 16 atoms, or the atoms that make up the Cp ligands are selected from the group consisting of carbon, nitrogen, oxygen, silicon, sulfur, phosphorous, germanium, boron and aluminum and combinations thereof, wherein carbon makes up at least 50% of the ring members. Or the Cp ligand(s) are selected from the group consisting of substituted and unsubstituted cyclopentadienyl ligands and ligands isolobal to cyclopentadienyl, non-limiting examples of which include cyclopentadienyl, indenyl, fluorenyl and other structures. Further non-limiting examples of such ligands include cyclopentadienyl, cyclopentaphenanthreneyl, indenyl, benzindenyl, fluorenyl, octahydrofluorenyl, cyclooctatetraenyl, cyclopentacyclododecene, phenanthrindenyl, 3,4-benzofluorenyl, 9-phenylfluorenyl, 8-H-cyclopent[a]acenaphthylenyl, 7H-dibenzofluorenyl, indeno[1,2-9]anthrene, thiophenoindenyl, thiophenofluorenyl, hydrogenated versions thereof (e.g., 4,5,6,7-tetrahydroindenyl, or "H4Ind"), substituted versions thereof, and heterocyclic versions thereof.

### Group 15-containing catalyst

The "Group 15-containing catalyst" may include Group 3 to Group 12 metal complexes, wherein the metal is 2 to 8 coordinate, the coordinating moiety or moieties including at least two Group 15 atoms, and up to four Group 15 atoms. In one embodiment, the Group 15-containing catalyst component is a complex of a Group 4 metal and from one to four ligands such that the Group 4 metal is at least 2 coordinate, the coordinating moiety or moieties including at least two nitrogens. Representative Group 15-containing compounds are disclosed in, for example, WO 99/01460; EP A1 0 893 454; US 5,318,935; US 5,889,128 US 6,333,389 B2 and US 6,271,325 B1. In one embodiment, the Group 15-containing catalyst includes a Group 4 imino-phenol complexes, Group 4 bis(amide) complexes, and Group 4 pyridyl-amide complexes that are active towards olefin polymerization to any extent.

### Activator

The term "activator" includes any compound or combination of compounds, supported or unsupported, which can activate a single-site catalyst compound (e.g., metallocenes, Group 15-containing catalysts), such as by creating a cationic species from the catalyst component. Typically, this involves the abstraction of at least one leaving group (X group in the formulas/structures above) from the metal center of the catalyst component. The catalyst components of embodiments described are thus activated towards olefin polymerization using such activators. Embodiments of such activators include Lewis acids such as cyclic or oligomeric poly(hydrocarbylaluminum oxides) and so called non-coordinating activators ("NCA") (alternately, "ionizing activators" or "stoichiometric activators"), or any other compound that can convert a neutral metallocene catalyst component to a metallocene cation that is active with respect to olefin polymerization.

Lewis acids may be used to activate the metallocenes described. Illustrative Lewis acids include, but are not limited to, alumoxane (e.g., "MAO"), modified alumoxane (e.g., "TIBAO"), and alkylaluminum compounds. Ionizing activators (neutral or ionic) such as tri (n-butyl)ammonium tetrakis(pentafluorophenyl)boron may be also be used. Further, a trisperfluorophenyl boron metalloid precursor may be used. Any of those activators/precursors can be used alone or in combination with the others.

MAO and other aluminum-based activators are known in the art. Ionizing activators are known in the art and are described by, for example, Eugene You-Xian Chen & Tobin J. Marks, Cocatalysts for Metal-Catalyzed Olefin Polymerization: Activators, Activation Processes, and Structure-Activity Relationships 100(4) Chemical Reviews 1391-1434 (2000). The activators may be associated with or bound to a support, either in association with the catalyst component (e.g., metallocene) or separate from the catalyst component, such as described by Gregory G. Hlatky, Heterogeneous Single-Site Catalysts for Olefin Polymerization 100(4) Chemical Reviews 1347-1374 (2000).

### Ziegler-Natta Catalyst

Illustrative Ziegler-Natta catalyst compounds are disclosed in Ziegler Catalysts 363-386 (G. Fink, R. Mulhaupt and H.H. Brintzinger, eds., Springer-Verlag 1995); or in EP 103 120; EP 102 503; EP 0 231 102; EP 0 703 246; RE 33,683; US 4,302,565; US 5,518,973; US 5,525,678; US 5,288,933; US 5,290,745; US 5,093,415 and US 6,562,905. Examples of such catalysts include those comprising Group 4, 5 or 6 transition metal oxides, alkoxides and halides, or oxides, alkoxides and halide compounds of titanium, zirconium or vanadium; optionally in combination with a magnesium compound, internal and/or external electron donors (alcohols, ethers, siloxanes, etc.), aluminum or boron alkyl and alkyl halides, and inorganic oxide supports.

Conventional-type transition metal catalysts are those traditional Ziegler-Natta catalysts that are well known in the art. Examples of conventional-type transition metal catalysts are discussed in US Patent Nos. 4,115,639, 4,077,904, 4,482,687, 4,564,605, 4,721,763, 4,879,359 and 4,960,741. The conventional-type transition metal catalyst compounds that may be used include transition metal compounds from Groups 3 to 17, or Groups 4 to 12, or Groups 4 to 6 of the Periodic Table of Elements.

These conventional-type transition metal catalysts may be represented by the formula: MRx, where M is a metal from Groups 3 to 17, or a metal from Groups 4 to 6, or a metal from Group 4, or titanium; R is a halogen or a hydrocarbyloxy group; and x is the valence of the metal M. Examples of R include alkoxy, phenoxy, bromide, chloride and fluoride. Examples of conventional-type transition metal catalysts where M is titanium include TiCl4, TiBr4, Ti(OC2H5)3Cl, Ti(OC2H5)Cl3, Ti(OC4H9)3Cl, Ti(OC3H7)2Cl2, Ti(OC2H5)2Br2, TiCl3.1/3AlCl3 and Ti(OC12H25)Cl3.

Conventional-type transition metal catalyst compounds based on magnesium/titanium electron-donor complexes are described in, for example, US Patent Nos. 4,302,565 and 4,302,566. Catalysts derived from Mg/Ti/Cl/THF are also contemplated, which are well known to those of ordinary skill in the art. One example of the general method of preparation of such a catalyst includes the following: dissolve TiCl4 in THF, reduce the compound to TiCl3 using Mg, add MgCl2, and remove the solvent.

Conventional-type cocatalyst compounds for the above conventional-type transition metal catalyst compounds may be represented by the formula M3M4vX2cR3b-c, wherein M3 is a metal from Group 1 to 3 and 12 to 13 of the Periodic Table of Elements; M4 is a metal of Group 1 of the Periodic Table of Elements; v is a number from 0 to 1; each X2 is any halogen; c is a number from 0 to 3; each R3 is a monovalent hydrocarbon radical or hydrogen; b is a number from 1 to 4; and wherein b minus c is at least 1. Other conventional-type organometallic cocatalyst compounds for the above conventional-type transition metal catalysts have the formula M3R3k, where M3 is a Group IA, IIA, IIB or IIIA metal, such as lithium, sodium, beryllium, barium, boron, aluminum, zinc, cadmium, and gallium; k equals 1, 2 or 3 depending upon the valency of M3 which valency in turn normally depends upon the particular Group to which M3 belongs; and each R3 may be any monovalent radical that include hydrocarbon radicals and hydrocarbon radicals containing a Group 13 to 16 element like fluoride, aluminum or oxygen or a combination thereof.

### Mixed catalyst system

The mixed catalyst can be a bimetallic catalyst composition or a multi-catalyst composition. As used herein, the terms "bimetallic catalyst composition" and "bimetallic catalyst" include any composition, mixture, or system that includes two or more different catalyst components, each having a different metal group. The terms "multi-catalyst composition" and "multi-catalyst" include any composition, mixture, or system that includes two or more different catalyst components regardless of the metals. Therefore, the terms "bimetallic catalyst composition," "bimetallic catalyst," "multi-catalyst composition," and "multi-catalyst" will be collectively referred to herein as a "mixed catalyst" unless specifically noted otherwise. In one preferred embodiment, the mixed catalyst includes at least one metallocene catalyst component and at least one non-metallocene component.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim is not defined above, it should be given the broadest definition persons in the pertinent art have given that term as reflected in at least one printed publication or issued patent.

While the foregoing is directed to embodiments of the present invention, other and further embodiments of the invention may be devised without departing from the basic scope thereof, and the scope thereof is determined by the claims that follow.

## Claims

1. A nozzle useful for injection of a liquid catalyst, a catalyst slurry, or mixtures thereof into an olefin polymerization reactor, comprising:
a first conduit comprising a body, a tapered section, and a tip section comprising an injection tip;
a second conduit having an inner surface and an outer surface and wherein the second conduit comprises a plurality of orifices spaced radially and axially thereabout, wherein the first conduit is disposed about the second conduit defining a first annulus therebetween; and
a support member at least partially disposed about an outer surface of the first conduit defining a second annulus therebetween, the support member having a converging outer surface at a first end thereof, wherein said injection tip of said first conduit extends 1.27 to 5.08 cm (0.5 to 2 inches) from said first end of said support member, and wherein said tip section has an annular thickness of between 0.25 and 1.57 mm (0.01 and 0.062 inches).

2. The nozzle of claim 1, wherein an outer surface of the injection tip of the first conduit converges.

3. The nozzle of claim 1 or 2, wherein an inner surface of the injection tip is constant.

4. The nozzle of claim 3, wherein the inner surface of the injection tip defines a flow path therethrough.

5. The nozzle of any one of claims 1 to 4, wherein an inner surface of the tapered section of the first conduit converges towards the injection tip.

6. The nozzle of any one of claims 1 to 5, wherein an inner surface of the body of the first conduit is constant.

7. The nozzle of any one of claims 1 to 6, wherein the second conduit has a first, opened end and a second, closed end.

8. The nozzle of any one of claims 1 to 7, wherein the second conduit comprises a first line of axially spaced orifices that is helically disposed about the second conduit.

9. The nozzle of any one of claims 1 to 8, wherein the second conduit comprises a first line of axially spaced orifices and a second line of axially spaced orifices, wherein each line is helically disposed about the second conduit such that corresponding axial orifices in the first and second lines are radially spaced.

10. The nozzle of claim 7, wherein the closed end of the second conduit extends beyond the converging outer surface of the support member.

11. The nozzle of any one of claims 1 to 10, further comprising one or more radial spacers disposed within the second annulus.

12. The nozzle of claim 11, wherein the one or more radial spacers comprise three or more equally spaced spacers disposed about an inner surface of the support member.

13. A method for catalyst injection into a gas phase polymerization reactor, comprising:
providing one or more nozzles to the reactor, at least one nozzle comprising:
a first conduit comprising a body, a tapered section, and a tip section comprising an injection tip;
a second conduit having an inner surface and an outer surface, and wherein the second conduit comprises a plurality of orifices spaced radially and axially thereabout, wherein the first conduit is disposed about the second conduit defining a first annulus therebetween; and
a support member at least partially disposed about an outer surface of the first conduit defining a second annulus therebetween, the support member having a converging outer surface at a first end thereof, wherein said injection tip of said first conduit extends 1.27 to 5.08 cm (0.5 to 2 inches) from said first end of said support member and wherein said section has an annular thickness of between 0.25 and 1.57 mm (0.01 and 0.062 inches);
flowing a catalyst slurry through the first annulus and into the reactor;
flowing one or more monomers through the second annulus and into the reactor; and
flowing one or more inert gases through the annulus of the second conduit into the first annulus and into the reactor.

14. The method of claim 13, wherein the catalyst slurry comprises one or more catalyst particles and one or more liquids.

15. The method of claim 13 or 14, wherein the catalyst slurry comprises one or more catalyst components selected from the group consisting of Ziegler-Natta catalysts, chromium-based catalysts, metallocene catalysts, Group 15-containing catalysts, bimetallic catalysts, and mixed catalysts.

16. The method of any one of claims 13 to 15, wherein the catalyst slurry comprises one or more Group 15-containing catalysts.

17. The method of any one of claims 13 to 16, wherein the catalyst slurry comprises one or more catalyst components selected from the group consisting of Group 4 iminophenol complexes, Group 4 bis(amide) complexes, and Group 4 pyridyl-amide complexes.

18. The method of any one of claims 13 to 17, wherein the flow rate of the one or more monomers through the second annulus is about 455 kg/hr to 2,273 kg/hr.

19. The method of any one of claims 13 to 18, wherein the flow rate of the catalyst slurry through the first annulus is about 1.4 kg/hr to about 14 kg/hr.

20. The method of any one of claims 13 to 19, further comprising mixing the one or more inert gases and catalyst slurry within the first annulus.

21. The method of any one of claims 13 to 20, further comprising flowing the mixture of the one or more inert gases and catalyst slurry through the injection tip of the first conduit into the reactor.

22. The method of any one of claims 13 to 21, further comprising atomizing the mixture of the one or more inert gases and catalyst slurry in the reactor with the flow of the one or more monomers through the second annulus.

## Patentansprüche

1. Eine Düse, die nützlich für die Einspritzung eines Flüssigkatalysators, einer Katalysatoraufschlämmung oder von Mischungen davon in einen Olefinpolymerisationsreaktor ist, beinhaltend:
eine erste Leitung, beinhaltend einen Körper, einen sich verjüngenden Abschnitt und einen Spitzenabschnitt, der eine Einspritzungsspitze beinhaltet;
eine zweite Leitung mit einer inneren Oberfläche und einer äußeren Oberfläche, und wobei die zweite Leitung eine Vielzahl von Öffnungen beinhaltet, die radial und axial darum herum beabstandet sind, wobei die erste Leitung um die zweite Leitung herum angeordnet ist und einen ersten Ring dazwischen definiert; und
ein Stützbauteil, das mindestens teilweise um eine äußere Oberfläche der ersten Leitung herum angeordnet ist und einen zweiten Ring dazwischen definiert, wobei das Stützbauteil an einem ersten Ende davon eine konvergierende äußere Oberfläche aufweist, wobei die Einspritzungsspitze der ersten Leitung 1,27 bis 5,08 cm (0,5 bis 2 Zoll) aus dem ersten Ende des Stützbauteils hinausragt und wobei der Spitzenabschnitt eine Ringdicke zwischen 0,25 und 1,57 mm (0,01 und 0,062 Zoll) aufweist.

2. Düse gemäß Anspruch 1, wobei eine äußere Oberfläche der Einspritzungsspitze der ersten Leitung konvergiert.

3. Düse gemäß Anspruch 1 oder 2, wobei eine innere Oberfläche der Einspritzungsspitze konstant ist.

4. Düse gemäß Anspruch 3, wobei die innere Oberfläche der Einspritzungsspitze einen Fließweg dort hindurch definiert.

5. Düse gemäß einem der Ansprüche 1 bis 4, wobei eine innere Oberfläche des sich verjüngenden Abschnitts der ersten Leitung hin zur Einspritzungsspitze konvergiert.

6. Düse gemäß einem der Ansprüche 1 bis 5, wobei eine innere Oberfläche des Körpers der ersten Leitung konstant ist.

7. Düse gemäß einem der Ansprüche 1 bis 6, wobei die zweite Leitung ein erstes, offenes Ende und ein zweites, geschlossenes Ende aufweist.

8. Düse gemäß einem der Ansprüche 1 bis 7, wobei die zweite Leitung eine erste Linie axial beabstandeter Öffnungen beinhaltet, die spiralförmig um die zweite Leitung herum angeordnet ist.

9. Düse gemäß einem der Ansprüche 1 bis 8, wobei die zweite Leitung eine erste Linie axial beabstandeter Öffnungen und eine zweite Linie axial beabstandeter Öffnungen beinhaltet, wobei jede Linie spiralförmig um die zweite Leitung herum angeordnet ist, sodass korrespondierende axiale Öffnungen in der ersten und zweiten Linie radial beabstandet sind.

10. Düse gemäß Anspruch 7, wobei das geschlossene Ende der zweiten Leitung über die konvergierende äußere Oberfläche des Stützbauteils hinausragt.

11. Düse gemäß einem der Ansprüche 1 bis 10, ferner beinhaltend ein oder mehrere radiale Abstandstücke, die innerhalb des zweiten Rings angeordnet sind.

12. Düse gemäß Anspruch 11, wobei das eine oder die mehreren radialen Abstandstücke drei oder mehr gleich beabstandete Abstandstücke beinhalten, die um eine innere Oberfläche des Stützbauteils herum angeordnet sind.

13. Ein Verfahren zur Katalysatoreinspritzung in einen Gasphasenpolymerisationsreaktor, beinhaltend:
Versehen des Reaktors mit einer oder mehreren Düsen, wobei mindestens eine Düse Folgendes beinhaltet:
eine erste Leitung, beinhaltend einen Körper, einen sich verjüngenden Abschnitt und einen Spitzenabschnitt, der eine Einspritzungsspitze beinhaltet;
eine zweite Leitung mit einer inneren Oberfläche und einer äußeren Oberfläche, und wobei die zweite Leitung eine Vielzahl von Öffnungen beinhaltet, die radial und axial darum herum beabstandet sind, wobei die erste Leitung um die zweite Leitung herum angeordnet ist und einen ersten Ring dazwischen definiert; und
ein Stützbauteil, das mindestens teilweise um eine äußere Oberfläche der ersten Leitung herum angeordnet ist und einen zweiten Ring dazwischen definiert, wobei das Stützbauteil an einem ersten Ende davon eine konvergierende äußere Oberfläche aufweist, wobei die Einspritzungsspitze der ersten Leitung 1,27 bis 5,08 cm (0,5 bis 2 Zoll) aus dem ersten Ende des Stützbauteils hinausragt und wobei der Abschnitt eine Ringdicke zwischen 0,25 und 1,57 mm (0,01 und 0,062 Zoll) aufweist;
Leiten einer Katalysatoraufschlämmung durch den ersten Ring und in den Reaktor;
Leiten eines oder mehrerer Monomere durch den zweiten Ring und in den Reaktor; und
Leiten eines oder mehrerer Inertgase durch den Ring der zweiten Leitung in den ersten Ring und in den Reaktor.

14. Verfahren gemäß Anspruch 13, wobei die Katalysatoraufschlämmung einen oder mehrere Katalysatorpartikel und eine oder mehrere Flüssigkeiten beinhaltet.

15. Verfahren gemäß Anspruch 13 oder 14, wobei die Katalysatoraufschlämmung eine oder mehrere Katalysatorkomponenten beinhaltet, ausgewählt aus der Gruppe, bestehend aus Ziegler-Natta-Katalysatoren, Katalysatoren auf Chrombasis, Metallocenkatalysatoren, Gruppe-15-haltigen Katalysatoren, Bimetallkatalysatoren und gemischten Katalysatoren.

16. Verfahren gemäß einem der Ansprüche 13 bis 15, wobei die Katalysatoraufschlämmung einen oder mehrere Gruppe-15-haltige Katalysatoren beinhaltet.

17. Verfahren gemäß einem der Ansprüche 13 bis 16, wobei die Katalysatoraufschlämmung eine oder mehrere Katalysatorkomponenten, ausgewählt aus der Gruppe, bestehend aus Gruppe-4-lminophenol-Komplexen, Gruppe-4-Bis(amid)-Komplexen und Gruppe-4-Pyridylamid-Komplexen, beinhaltet.

18. Verfahren gemäß einem der Ansprüche 13 bis 17, wobei die Fließrate des einen oder der mehreren Monomere durch den zweiten Ring ungefähr 455 kg/h bis 2273 kg/h beträgt.

19. Verfahren gemäß einem der Ansprüche 13 bis 18, wobei die Fließrate der Katalysatoraufschlämmung durch den ersten Ring ungefähr 1,4 kg/h bis ungefähr 14 kg/h beträgt.

20. Verfahren gemäß einem der Ansprüche 13 bis 19, ferner beinhaltend das Mischen des einen oder der mehreren Inertgase und der Katalysatoraufschlämmung innerhalb des ersten Rings.

21. Verfahren gemäß einem der Ansprüche 13 bis 20, ferner beinhaltend das Leiten der Mischung aus dem einen oder den mehreren Inertgasen und der Katalysatoraufschlämmung durch die Einspritzungsspitze der ersten Leitung in den Reaktor.

22. Verfahren gemäß einem der Ansprüche 13 bis 21, ferner beinhaltend das Zerstäuben der Mischung aus dem einen oder den mehreren Inertgasen und der Katalysatoraufschlämmung im Reaktor mit dem Fluss des einen oder der mehreren Monomere durch den zweiten Ring.

## Revendications

1. Une buse utile pour l'injection d'un catalyseur liquide, d'une suspension épaisse de catalyseur, ou de mélanges de ceux-ci dans un réacteur de polymérisation d'oléfines, comprenant :
un premier conduit comprenant un corps, une section effilée, et une section d'embout comprenant un embout d'injection ;
un deuxième conduit ayant une surface interne et une surface externe et dans laquelle le deuxième conduit comprend une pluralité d'orifices espacés radialement et axialement autour de celui-ci, dans laquelle le premier conduit est disposé autour du deuxième conduit définissant un premier espace annulaire entre ceux-ci ; et
un organe de support au moins partiellement disposé autour d'une surface externe du premier conduit définissant un deuxième espace annulaire entre ceux-ci, l'organe de support ayant une surface externe convergente au niveau d'une première extrémité de celui-ci, dans laquelle ledit embout d'injection dudit premier conduit s'étend de 1,27 à 5,08 cm (0,5 à 2 pouces) à partir de ladite première extrémité dudit organe de support, et dans laquelle ladite section d'embout a une épaisseur annulaire comprise entre 0,25 et 1,57 mm (0,01 et 0,062 pouce).

2. La buse de la revendication 1, dans laquelle une surface externe de l'embout d'injection du premier conduit converge.

3. La buse de la revendication 1 ou de la revendication 2, dans laquelle une surface interne de l'embout d'injection est constante.

4. La buse de la revendication 3, dans laquelle la surface interne de l'embout d'injection définit un chemin d'écoulement à travers celui-ci.

5. La buse de l'une quelconque des revendications 1 à 4, dans laquelle une surface interne de la section effilée du premier conduit converge vers l'embout d'injection.

6. La buse de l'une quelconque des revendications 1 à 5, dans laquelle une surface interne du corps du premier conduit est constante.

7. La buse de l'une quelconque des revendications 1 à 6, dans laquelle le deuxième conduit a une première extrémité, ouverte, et une deuxième extrémité, fermée.

8. La buse de l'une quelconque des revendications 1 à 7, dans laquelle le deuxième conduit comprend une première ligne d'orifices espacés axialement qui est disposée hélicoïdalement autour du deuxième conduit.

9. La buse de l'une quelconque des revendications 1 à 8, dans laquelle le deuxième conduit comprend une première ligne d'orifices espacés axialement et une deuxième ligne d'orifices espacés axialement, dans laquelle chaque ligne est disposée hélicoïdalement autour du deuxième conduit de telle sorte que des orifices axiaux correspondants dans les première et deuxième lignes sont radialement espacés.

10. La buse de la revendication 7, dans laquelle l'extrémité fermée du deuxième conduit s'étend au-delà de la surface externe convergente de l'organe de support.

11. La buse de l'une quelconque des revendications 1 à 10, comprenant en outre un ou plusieurs espaceurs radiaux disposés au sein du deuxième espace annulaire.

12. La buse de la revendication 11, dans laquelle les un ou plusieurs espaceurs radiaux comprennent trois espaceurs également espacés ou plus disposés autour d'une surface interne de l'organe de support.

13. Un procédé pour l'injection de catalyseur dans un réacteur de polymérisation en phase gazeuse, comprenant :
le fait de fournir une ou plusieurs buses au réacteur, au moins une buse comprenant :
un premier conduit comprenant un corps, une section effilée, et une section d'embout comprenant un embout d'injection ;
un deuxième conduit ayant une surface interne et une surface externe, et dans lequel le deuxième conduit comprend une pluralité d'orifices espacés radialement et axialement autour de celui-ci, dans lequel le premier conduit est disposé autour du deuxième conduit définissant un premier espace annulaire entre ceux-ci ; et
un organe de support au moins partiellement disposé autour d'une surface externe du premier conduit définissant un deuxième espace annulaire entre ceux-ci, l'organe de support ayant une surface externe convergente au niveau d'une première extrémité de celui-ci, dans lequel ledit embout d'injection dudit premier conduit s'étend de 1,27 à 5,08 cm (0,5 à 2 pouces) à partir de ladite première extrémité dudit organe de support, et dans lequel ladite section a une épaisseur annulaire comprise entre 0,25 et 1,57 mm (0,01 et 0,062 pouce) ;
le fait d'amener une suspension épaisse de catalyseur à s'écouler à travers le premier espace annulaire et jusque dans le réacteur ;
le fait d'amener un ou plusieurs monomères à s'écouler à travers le deuxième espace annulaire et jusque dans le réacteur ;
et
le fait d'amener un ou plusieurs gaz inertes à s'écouler à travers l'espace annulaire du deuxième conduit jusque dans le premier espace annulaire et jusque dans le réacteur.

14. Le procédé de la revendication 13, dans lequel la suspension épaisse de catalyseur comprend une ou plusieurs particules de catalyseur et un ou plusieurs liquides.

15. Le procédé de la revendication 13 ou de la revendication 14, dans lequel la suspension épaisse de catalyseur comprend un ou plusieurs constituants catalyseurs sélectionnés dans le groupe constitué de catalyseurs de Ziegler-Natta, de catalyseurs à base de chrome, de catalyseurs métallocènes, de catalyseurs contenant un élément du Groupe 15, de catalyseurs bimétalliques, et de catalyseurs mixtes.

16. Le procédé de l'une quelconque des revendications 13 à 15, dans lequel la suspension épaisse de catalyseur comprend un ou plusieurs catalyseurs contenant un élément du Groupe 15.

17. Le procédé de l'une quelconque des revendications 13 à 16, dans lequel la suspension épaisse de catalyseur comprend un ou plusieurs constituants catalyseurs sélectionnés dans le groupe constitué de complexes iminophénol-élément du Groupe 4, de complexes bis(amide)-élément du Groupe 4, et de complexes pyridyl-amide-élément du Groupe 4.

18. Le procédé de l'une quelconque des revendications 13 à 17, dans lequel le débit des un ou plusieurs monomères à travers le deuxième espace annulaire va d'environ 455 kg/h à 2 273 kg/h.

19. Le procédé de l'une quelconque des revendications 13 à 18, dans lequel le débit de la suspension épaisse de catalyseur à travers le premier espace annulaire va d'environ 1,4 kg/h à environ 14 kg/h.

20. Le procédé de l'une quelconque des revendications 13 à 19, comprenant en outre le mélange des un ou plusieurs gaz inertes et de la suspension épaisse de catalyseur au sein du premier espace annulaire.

21. Le procédé de l'une quelconque des revendications 13 à 20, comprenant en outre le fait d'amener le mélange des un ou plusieurs gaz inertes et de la suspension épaisse de catalyseur à s'écouler par l'embout d'injection du premier conduit jusque dans le réacteur.

22. Le procédé de l'une quelconque des revendications 13 à 21, comprenant en outre le fait d'atomiser le mélange des un ou plusieurs gaz inertes et de la suspension épaisse de catalyseur dans le réacteur avec l'écoulement des un ou plusieurs monomères à travers le deuxième espace annulaire.
